# EUROPÄISCHE PATENTSCHRIFT

(11) **EP 0 941 476 B1**
(45) Veröffentlichungstag und Bekanntmachung des Hinweises auf die Patenterteilung: **04.06.2008**
(21) Anmeldenummer: 98958802.5
(22) Anmeldetag: 02.10.1998
(51) Int. Cl.: G01N 27/406

(54) **VERFAHREN ZUM BETRIEB EINES GASSENSORS**
METHOD FOR OPERATING A GAS SENSOR
PROCEDE POUR LE FONCTIONNEMENT D'UN DETECTEUR DE GAZ

(30) Priorität: 02.10.1997 DE 19743644
(43) Veröffentlichungstag der Anmeldung: 15.09.1999
(73) Patentinhaber: ROBERT BOSCH GMBH, 70442 Stuttgart (DE)
(72) Erfinder: BLOEMER, Bernhard, D-70435 Stuttgart (DE); SCHUMANN, Bernd, D-71277 Rutesheim (DE)
(86) Internationale Anmeldenummer: PCT/DE1998/002930
(87) Internationale Veröffentlichungsnummer: WO 1999/018429

(56) Entgegenhaltungen:
- WO-A-90/06431
- DE-A- 4 341 538
- US-A- 4 332 225
- US-A- 4 787 966
- US-A- 5 596 975

## Beschreibung

### Stand der Technik

Die Erfindung betrifft ein Verfahren zum Betrieb eines Gassensors mit zwei in einer durch eine elektrische Heizung beheizbaren ionenleitenden Keramik angeordneten Sensorelektroden, deren Ausgangssignale in einer den Sensorelektroden nachgeschalteten Auswerteschaltung ausgewertet werden.

Solche keramischen Gassensoren sind seit längerem bekannt. Sie werden zur Detektion von schädlichen Abgasen beispielsweise von Auto- oder Brennerabgasen eingesetzt. Die ionenleitende Keramik, beispielsweise Zirkonoxid (ZrO₂), muß zur Gewährleistung einer ordnungsgemäßen Funktion beheizt werden. Die Heizung ist in eine Isolierschicht, die meistens aus Aluminiumoxid (Al₂O₃) besteht, eingebettet. Insbesondere bei hohen Temperaturen ist die Isolation der Heizung aber problematisch, da sich Leckwiderstände von der Heizung zu den Sensorelektroden in der Größenordnung von einigen Megaohm ergeben. In diesem Falle ist der von der Heizung wegfließende Leckstrom dem eigentlichen Meßstrom überlagert und verursacht - da bei derartigen Gassensoren der Meßeffekt nur bei wenigen Mikroampere liegt - verhältnismäßig große Fehler.

Da bei Gassensoren darüber hinaus große Exemplarstreuungen und eine große Alterung auftreten, kann der Leckstrom andererseits auch nicht einfach durch eine feste Korrekturgröße kompensiert werden.

Aus diesem Grunde ist beispielsweise bekannt, zur Messung des Meßstroms einen Isolierverstärker einzusetzen. Durch diesen wird die eigentliche Meßschaltung potentialgetrennt betrieben und die Meßgröße isoliert zur weiteren Signalverarbeitung übertragen. Die Potentialtrennung kann beispielsweise durch Transformatoren oder optoelektronisch erfolgen. In diesem Falle kann der Leckstrom nicht abfließen und verschwindet daher. Als Folge davon wird nur der gewünschte Meßstrom gemessen. Nachteilig bei diesem Meßverfahren ist der hohe Bedarf an teuren, nicht oder nur schwer integrierbaren Bauteilen.

Aus der EP 0 403 615 B1 geht des weiteren ein Verfahren und eine Vorrichtung zum Erkennen eines Fehlerzustands einer λ-Sonde und zum Ergreifen von Maßnahmen als Folge eines Fehlersignals, welches bei erkanntem Fehlerzustand abgegeben wird, hervor, bei dem durch ein Korrelationsverfahren unzulässig große Fehlerursachen während des Betriebs der λ-Sonde diagnostiziert werden. Da Nebenschlüsse nur während des Betriebs der Heizung existieren, wird bei diesem Meßverfahren zur Erkennung eines Fehlerzustands die Sondenheizung ausgeschaltet, da in diesem Fall keine Nebenschlußspannung und damit keine Verfälschung des Meßergebnisses vorliegt. Die Differenz zwischen der bei eingeschalteter und ausgeschalteter Heizung gemessenen Sondenspannung ergibt die Nebenschlußspannung. Dieses Verfahren ist verhältnismäßig aufwendig und erfordert eine recht umfängliche Schaltung.

Die Verwendung pulsweitenmoduliertes Heizströme ist beispielsweise aus US 5596975 und DE 4341538 bekannt.

Der Erfindung liegt daher die Aufgabe zugrunde, ein gattungsgemäßes Verfahren zum Betrieb eines Gassensors zu vermitteln, welches mit einem möglichst geringen technischen Aufwand eine möglichst präzise Erfassung des Meßstroms, d.h. eine weitestgehende Eliminierung einer durch einen Leckstrom hervorgerufenen Störung ermöglicht.

### Vorteile der Erfindung

Die Aufgabe wird bei einem Verfahren zum Betrieb eines Gassensors der eingangs beschriebenen Art dadurch gelöst, daß man an die Heizung ein pulsweitenmoduliertes Heizspannungssignal anlegt und daß man dem Ausgangssignal der Sensorelektroden ein Kompensationssignal überlagert, das gegentaktförmig und invertiert zu dem pulsweitenmodulierten Heizspannungssignal ausgebildet ist.

Durch das Anlegen eines pulsweitenmodulierten Heizspannungssignal und dadurch, daß man dem Ausgangssignal der Sensorelektrode ein Kompensationssignal überlagert, welches ein Gegentaktsignal zu dem pulsweitenmodulierten Heizspannungssignal darstellt, kann man auf besonders einfache Weise das Störsignal, welches durch die Heizspannung auf das Sensorsignal eingekoppelt wird, eliminieren. Dieses Störsignal hat nämlich im wesentlichen die Gestalt des pulsweitenmodulierten Heizungsspannungssignals mit kapazitiven Einkopplungsspitzen und wird durch das Kompensationssignal, welches als Gegentaktsignal, das heißt als inverses Signal zu diesem Heizspannungssignal ausgebildet ist, weitestgehend kompensiert.

Die Überlagerung des Kompensationssignals kann rein prinzipiell auf die unterschiedlichste Art und Weise erfolgen. Eine vorteilhafte Ausführungsform sieht vor, daß das Kompensationssignal dem Ausgangssignal überlagert wird, bevor dieses der Auswerteschaltung zugeführt wird. In diesem Falle kann die Überlagerung auf analoge, schaltungstechnisch einfach zu realisierende Weise erfolgen und es muß lediglich ein bereits kompensiertes Signal in der Auswerteschaltung verarbeitet werden.

Bei einer anderen vorteilhaften Ausführungsform ist vorgesehen, daß das Kompensationssignal dem Ausgangssignal der Auswerteschaltung überlagert wird. In diesem Falle kann die Überlagerung ebenfalls auf analoge und schaltungstechnisch einfach zu realisierende Weise überlagert, d.h. addiert, werden.

Bei einer weiteren vorteilhaften Ausführungsform ist vorgesehen, daß das Kompensationssignal dem Sensorsignal in der Auswerteschaltung, vorzugsweise auf digitalem Wege überlagert wird. Diese Ausführungsform hat insbesondere den Vorteil, daß die ohnehin vorhandene Auswerteschaltung zur Verarbeitung des Kompensationssignals genutzt werden kann, so daß zusätzliche Schaltungsteile zur Überlagerung des Kompensationssignals nicht erforderlich sind.

Hinsichtlich des pulsweitenmodulierten Heizspannungssignals wurden bislang noch keine näheren Ausführungen gemacht. Eine besonders vorteilhafte Ausführungsform, die insbesondere eine weitere Verkleinerung des Störsignals ermöglicht, sieht vor, daß das pulsweitenmodulierte Heizspannungssignal flach verlaufende Flanken aufweist. Durch diese flach verlaufenden, d.h. langsam ansteigenden und langsam abfallenden Flanken des pulsweitenmodulierten Heizspannungssignals oder mit anderen Worten dadurch, daß die pulsweitenmodulierte Heizspannung mit flachen Flanken getaktet wird, werden insbesondere auf besonders vorteilhafte Weise hohe Frequenzen in dem Heizspannungssignal vermieden, die auf weiter unten näher zu beschreibende Weise zu Störungen führen.

Die Erzeugung eines derartigen Heizspannungssignal mit flach verlaufenden Flanken kann auf die unterschiedlichste Art und Weise geschehen. Eine vorteilhafte Ausführungsform sieht vor, daß das pulsweitenmodulierte Heizspannungssignal mit flach verlaufenden Flanken durch eine MOSFET-Schalter erzeugt wird, in dessen Gate-Zuleitung ein Vorwiderstand angeordnet ist. Durch diesen Vorwiderstand in der Gate-Zuleitung des MOSFET-Schalters entsteht zusammen mit der Gate-Kapazität ein RC-Tiefpaß, der ein langsames Schalten des pulsweitenmodulierten Heizspannungssignal und somit eine Verringerung der hochfrequenten Anteile in dem Signal ermöglicht.

### Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: schematisch eine erste Ausführungsform eines erfindungsgemäßen Verfahrens zum Betrieb eines Gassensors anhand einer Schaltung zum Betrieb des Gassensors;
- Fig. 2: eine andere Ausführungsform eines erfindungsgemäßen Verfahrens zum Betrieb eines Gassensors anhand einer Schaltung zum Betrieb des Gassensors;
- Fig. 3: eine wiederum andere Ausführungsform des Verfahrens zum Betrieb eines Gassensors anhand einer Schaltung zum Betrieb des Gassensors und
- Fig. 4: schematisch einen an sich bekannten Gassensor.

### Beschreibung der Ausführungsbeispiele

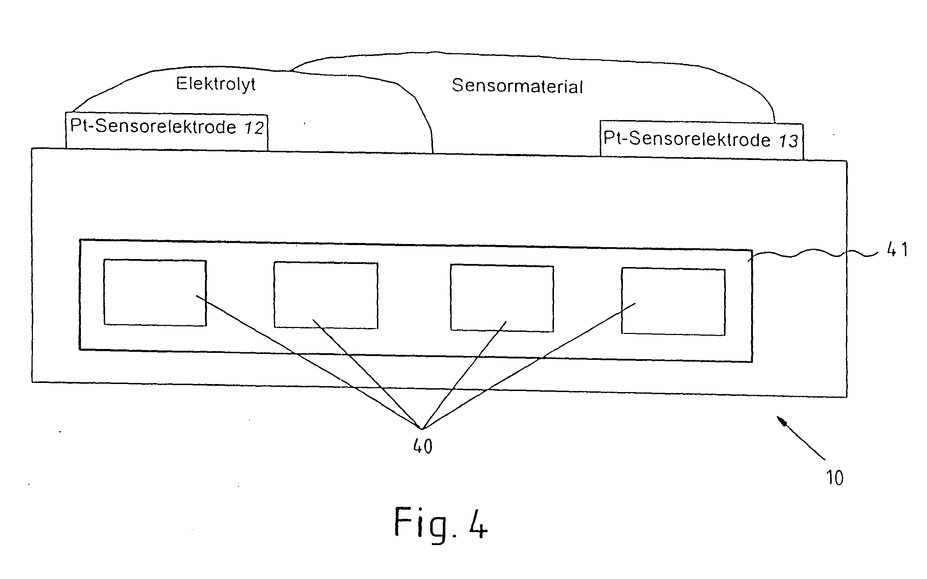

Ein schematisch in Fig. 4 dargestellter Gassensor zur Detektion beispielsweise von CO, NO, Kohlenwasserstoff oder anderen Abgasen umfaßt zwei Sensorelektroden 12, 13, die jeweils in einem Elektrolyten, beispielsweise Zirkonoxid ZrO₂ und einem Sensormaterial, beispielsweise dotiertes Titandioxid eingebettet sind. Für einen ordnungsgemäßen Betrieb des Gassensors muß dieser durch eine Heizung 40, die mäanderförmig in einer beispielsweise aus Al₂O₃ bestehenden Isolierschicht 41 eingebettet ist, beheizt werden. Bei dem in Fig. 4 dargestellten Ausführungsbeispiel besteht der Träger beispielsweise aus Zirkonoxid, die Aluminiumoxidschicht 41, in die die Heizung eingebettet ist, wird beispielsweise durch Siebdrucktechnik erzeugt.

Darüber hinaus kann aber auch der Träger selbst aus Aluminiumoxid Al₂O₃ bestehen. Es versteht sich, daß in diesem Falle jegliche Einbettung der Heizung entfallen kann, da Al₂O₃ nichtleitend ist.

Da die Heizung nicht vollständig isoliert werden kann, insbesondere nicht bei hohen Temperaturen, wo zudem die Leitfähigkeit von Zirkondioxid zunimmt, kommt es durch eine auf Ionen- oder Elektronenleitung basierenden Restleitfähigkeit in dem keramischen Substrat oder der Elektrolyt- und der Sensormaterial-Schicht zu störenden Einkopplungen der Heizspannung in das Sensorsignal.

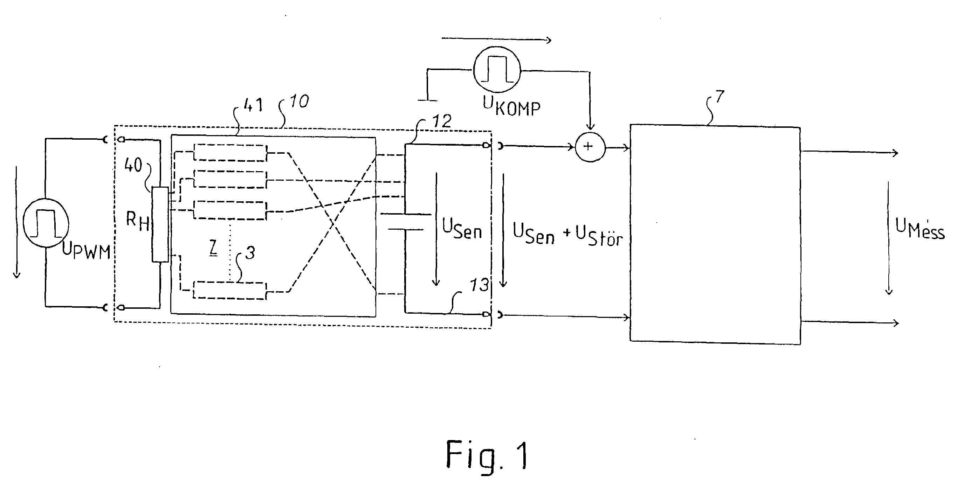

In Fig. 1 bis 3 ist schematisch eine Schaltung zum Betrieb eines Gassensor dargestellt. In dieser Darstellung ist die Heizung 40 als Widerstand R_{H} dargestellt. Dem an den Sensorelektroden 12, 13 abgegriffenen Sensorsignal U_{Sen} ist ein Störsignal U_{Stör} überlagert, das auf oben ausgeführte Weise durch Einkopplungen der Heizspannung entsteht. Die Störung kann, wie in den Fig. 1 bis 3 schematisch dargestellt, durch eine endliche, parasitäre Impedanz Z dargestellt werden. Diese Impedanz Z wird durch unendlich viele Einzelimpedanzen, schematisch dargestellt durch gestrichelte Widerstände 3, gebildet. Über diese koppelt die Heizung unterschiedlich hohe Störspannungen an unterschiedlichen Stellen der Sensorelektroden 12, 13 ein, so daß dem eigentlichen Sensorsignal U_{Sen} das Störsignal U_{Stör} überlagert wird: U_{Sen} + U_{Stör}. Dieses Signal wird in einer Auswerteschaltung 7 verarbeitet, welche ein Meßsignal U_{Mess} zur Weiterverarbeitung ausgibt.

Um die oben beschriebenen Störungen weitestgehend zu minimieren, wird nun folgendermaßen vorgegangen:

Man legt an die Heizung ein pulsweitenmoduliertes Signal U_{PWM} und man überlagert dem Ausgangssignal der Sensorelektroden U_{Sen} ein Kompensationssignal U_{Komp}, das im wesentlichen gegentaktförmig (also invertiert) zu dem pulsweitenmodulierten Heizspannungssignal U_{PWM} ausgebildet ist. Durch diese Überlagerung wird der Störanteil des Signals U_{Stör} verringert. Wie in Fig. 1 dargestellt, kann die Überlagerung vor der Auswerteschaltung 7 durch Addition des Kompensationssignals U_{Komp} erfolgen.

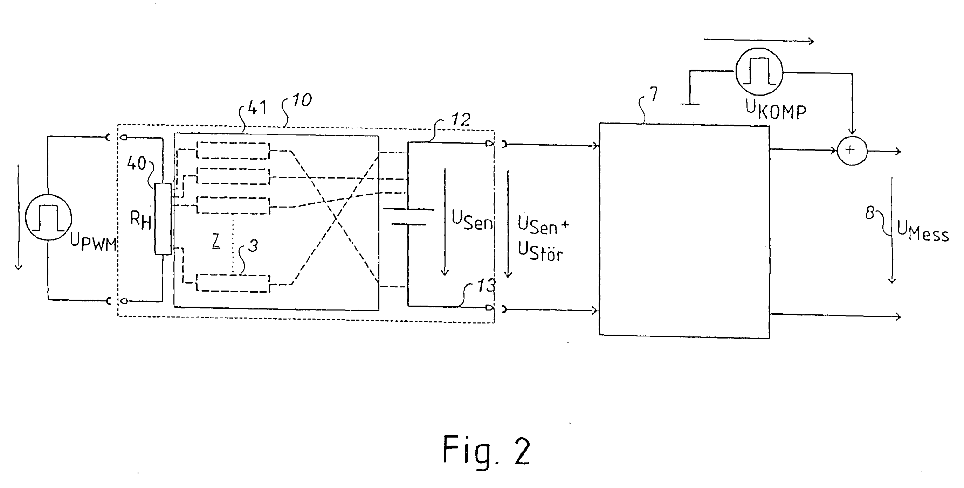

Bei der in Fig. 2 dargestellten Schaltung wird das Kompensationssignal dem Ausgangssignal der Auswerteschaltung durch Addition überlagert.

Die Überlagerung erfolgt in diesen beiden Fällen auf analoge Weise.

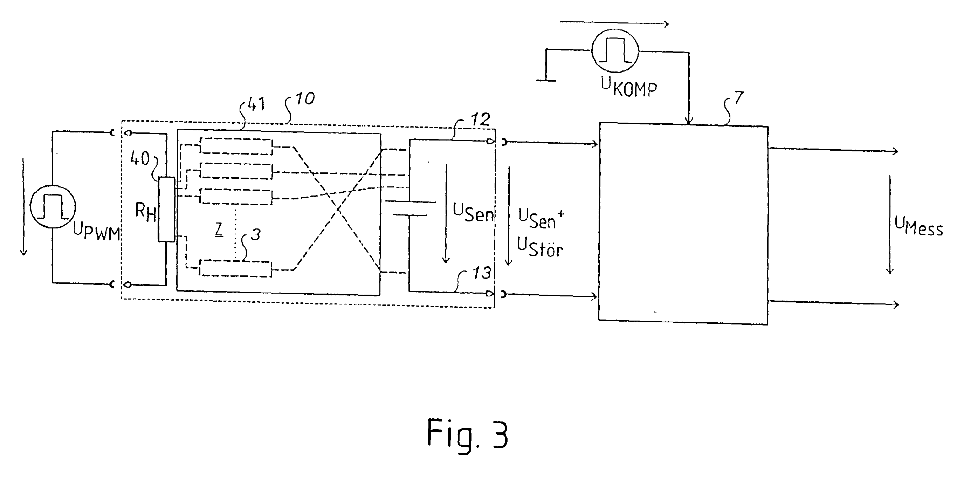

Bei dem in Fig. 3 dargestellten Ausführungsbeispiel wird das Kompensationssignal auf digitale Weise in der Auswerteschaltung des Sensorsignals 7 überlagert. In diesem Falle sind keine zusätzlichen Schaltungsteile erforderlich. Die Überlagerung des Kompensationssignals erfolgt als integraler Bestandteil der Auswerteschaltung 7, die beispielsweise einen Mikrocomputer enthalten kann, so daß die Überlagerung auf programmtechnischem Wege erfolgen kann.

Das pulsweitenmodulierte Heizspannungssignal ist darüber hinaus so ausgestaltet, daß es flach, d.h. in Abhängigkeit von der Zeit langsam ansteigende und abfallende Flanken aufweist. Derartige langsam ansteigenden und abfallende Flanken besitzen einen geringeren Störungen verursachenden hochfrequenten Anteil als schnell ansteigende und abfallende Flanken (Fourierzerlegung). Da nämlich der kapazitive Teil der parasitären Impedanz Z mit höherer Frequenz niederohmiger und somit besser leitend für das Störsignal wird, sollten zur Minimierung der Störspannung daher hohe Frequenzen im Heizspannungssignal U_{PWM} vermieden werden.

Das pulsweitenmodulierte Heizspannungssignal U_{PWM} kann beispielsweise mit Hilfe eines MOSFET-Schalters getaktet werden. In diesem Falle wird ein Vorwiderstand in der Gate-Zuleitung des MOSFET-Schalters vorgesehen, der zusammen mit der Gate-Kapazität einen RC-Tiefpaß bildet. Dieser Tiefpaß bewirkt ein langsames Schalten der pülsweitenmodulierten Heizspannung und somit eine Verringerung der hochfrequenten Anteile in dem Signal.

Durch das oben beschriebene Verfahren wird insbesondere bei sehr kleinen Sensorströmen, die bei besonders niedrigen Gaskonzentrationen auftreten, Störsignale durch einen relativ geringen technischen Aufwand minimiert. Hierdurch wird die Erfassung des Sensorsignals U_{Sen} vereinfacht bzw. erst ermöglicht.

## Patentansprüche

1. Verfahren zur Eliminierung von durch Leckströme hervorgerufenen Störungen beim Betrieb eines Gassensors mit zwei in einer durch eine elektrische Heizung beheizbaren ionenleitenden Keramik angeordneten Sensorelektroden (12,13), deren Ausgangssignal (U_{Sen}) in einer den Sensorelektroden (12,13) nachgeschalteten Auswerteschaltung (7) ausgewertet wird, wobei man an die Heizung (40) ein pulsweitenmoduliertes Heizspannungssignal (U_{PWM}) anlegt, **dadurch gekennzeichnet, dass** man dem Ausgangssignal der Sensorelektroden (U_{Sen}) ein Kompensationssignal (U_{Komp}) überlagert, das gegentaktförmig und invertiert zu dem pulsweitenmodulierten Heizspannungssignal (U_{PWM}) ausgebildet ist.

2. Verfahren nach Anspruch 1, **dadurch gekennzeichnet, dass** das Kompensationssignal (U_{Komp}) dem Ausgangssignal der Sensorelektroden (U_{Sen}) überlagert wird, bevor dieses der Auswerteschaltung (7) zugeführt wird.

3. Verfahren nach Anspruch 1, **dadurch gekennzeichnet, dass** das Kompensationssignal (U_{Komp}) dem Ausgangssignal der Auswerteschaltung (7) überlagert wird.

4. Verfahren nach Anspruch 1, **dadurch gekennzeichnet, dass** das Kompensationssignal (U_{Komp}) dem Sensorsignal (U_{Sen}) in der Auswerteschaltung (7) vorzugsweise auf digitalem Wege überlagert wird.

5. Verfahren nach einem der Ansprüche 1 bis 4, **dadurch gekennzeichnet, dass** das pulsweitenmodulierte Heizspannungssignal (U_{PWM}) flach verlaufende Flanken aufweist.

6. Verfahren nach Anspruch 5, **dadurch gekennzeichnet, dass** das pulsweitenmodulierte Heizspannungssignal (U_{PWM}) durch einen MOSFET-Schalter erzeugt wird, in dessen Gate-Zuleitung ein Vorwiderstand angeordnet ist.

## Claims

1. Method for eliminating interference caused by leakage currents during operation of a gas sensor having two sensor electrodes (12, 13) which are arranged in an ion-conducting ceramic which can be heated by means of an electrical heater, the output signal (U_{Sen}) from said electrodes being evaluated in an evaluation circuit (7) connected downstream of the sensor electrodes (12, 13), and a pulse-width-modulated heating voltage signal (U_{PWM}) being applied to the heater (40), **characterized in that** a compensation signal (U_{Comp}), which is in the form of a push-pull signal and is inverted with respect to the pulse-width-modulated heating voltage signal (U_{PWM}), is superimposed on the output signal from the sensor electrodes (U_{Sen}).

2. Method according to Claim 1, **characterized in that** the compensation signal (U_{Comp}) is superimposed on the output signal from the sensor electrodes (U_{Sen}) before the latter signal is supplied to the evaluation circuit (7).

3. Method according to Claim 1, **characterized in that** the compensation signal (U_{Comp}) is superimposed on the output signal from the evaluation circuit (7).

4. Method according to Claim 1, **characterized in that** the compensation signal (U_{Comp}) is preferably digitally superimposed on the sensor signal (U_{Sen}) in the evaluation circuit (7).

5. Method according to one of Claims 1 to 4, **characterized in that** the pulse-width-modulated heating voltage signal (U_{PWM}) has flat edges.

6. Method according to Claim 5, **characterized in that** the pulse-width-modulated heating voltage signal (U_{PWM}) is generated by a MOSFET switch whose gate lead has a series resistor arranged in it.

## Revendications

1. Procédé pour éliminer les perturbations engendrées par des courants de fuite dans le fonctionnement d'un capteur de gaz comportant deux électrodes de capteur (12, 13) installées dans une céramique conductrice d'ions, susceptibles d'être chauffées par un moyen de chauffage électrique, et dont le signal de sortie (Uₛₑₙ) est exploité par un circuit d'exploitation (7) installé en aval des électrodes de capteur (12, 13),
selon lequel on applique un signal de tension de chauffage (U_{pwm}) à largeur d'impulsion modulée au moyen de chauffage (40),
**caractérisé en ce que**
l'on combine au signal de sortie des électrodes de capteur (Uₛₑₙ), un signal de compensation (Uₖₒₘₚ) qui est de forme en opposition de phase et inversé par rapport au signal de tension de chauffage (U_{pwm}) à modulation de largeur d'impulsion.

2. Procédé selon la revendication 1,
**caractérisé en ce que**
l'on combine le signal de compensation (Uₖₒₘₚ) au signal de sortie des électrodes de capteur (Uₛₑₙ) avant que ce signal ne soit fourni au circuit d'exploitation (7).

3. Procédé selon la revendication 1,
**caractérisé en ce que**
l'on combine le signal de compensation (Uₖₒₘₚ) au signal de sortie du circuit d'exploitation (7).

4. Procédé selon la revendication 1,
**caractérisé en ce que**
l'on combine le signal de compensation (Uₖₒₘₚ) au signal de capteur (Uₛₑₙ) dans le circuit d'exploitation (7), de préférence par une combinaison numérique.

5. Procédé selon l'une des revendications 1 à 4,
**caractérisé en ce que**
le signal de tension de chauffage (U_{pwm}) à modulation par largeur d'impulsion, présente des flancs plats.

6. Procédé selon la revendication 5,
**caractérisé en ce que**
l'on génère le signal de tension de chauffage (U_{pwm}) modulé en largeur d'impulsion par un commutateur MOSFET dont la ligne de la porte comporte une résistance intermédiaire.
